# EUROPEAN PATENT SPECIFICATION

(11) **EP 3 839 135 B1**
(45) Date of publication and mention of the grant of the patent: **27.07.2022**
(21) Application number: 19217789.7
(22) Date of filing: 19.12.2019
(51) Int. Cl.: D21F 1/00

(54) **PAPER MACHINE CLOTHING AND METHOD OF PRODUCING THE SAME**
PAPIERMASCHINENBESPANNUNG UND VERFAHREN ZUR HERSTELLUNG DAVON
TOILE POUR MACHINE À PAPIER ET SON PROCÉDÉ DE FABRICATION

(43) Date of publication of application: 23.06.2021
(73) Proprietor: Voith Patent GmbH, 89522 Heidenheim (DE)
(72) Inventor: Köckritz Dr., Uwe, 89522 Heidenheim (DE); Iniotakis, Christian, 89542 Herbrechtingen (DE); Holl, Reinhard, 89415 Lauingen (DE); Kallenberg, Jens, 89542 Herbrechtingen (DE); Straub, Michael, 89555 Söhnstetten (DE); Fitzer, Cedric, 89264 Weißenhorn (DE)
(74) Representative: Voith Patent GmbH - Patentabteilung

(56) References cited:
- EP-A1- 3 348 708
- WO-A1-2010/088283

## Description

The present invention concerns a paper machine clothing comprising a substrate with an upper side, a lower side, two lateral edges and an usable region between the two lateral edges, wherein the usable region comprises a plurality of through-channels extending through the substrate and connecting the upper side with the lower side, wherein the through-channels are non-cylindrical with a cross sectional area becoming smaller when going in a thickness direction of the substrate from the upper side to a middle region of the substrate between the upper side and the lower side and wherein an upper rim of at least one of the plurality of through-channels directly contacts an upper rim of at least one other neighboring through-channel of the plurality of through-channels. Another aspect of the present invention concerns a method of producing such a paper machine clothing.

In the sense of the present invention the term "paper machine clothing", abbreviated "PMC", refers to any kind of a rotating clothing used to transport a nascent or already formed fiber web in a machine that is designed to continuously produce and/or finish a fiber web, such as paper, tissue or board material. For historical reasons, PMC is sometimes also called wire, felt or fabric. In particular, PMC can be a forming wire or a dryer fabric or a press felt, depending upon its intended use in the corresponding machine. Furthermore, in the sense of the present invention the term PMC may also refer to any kind of clothing used in wet and/or dry production of fibrous nonwovens.

The term "substrate" in the sense of the present invention refers to some kind of foil material made of plastic. The substrate itself is usually impermeable to water, so that through-channels are needed to obtain a desired permeability, e.g. for dewatering the nascent fiber web or further drying the already formed fiber web. The substrate can be formed in a monolithic way or comprise several layers that might be co-extruded or produced separately and laminated together afterwards. After joining the longitudinal ends of the substrate to each other, e.g. by laser welding, to obtain some kind of an endless belt, the perforated substrate may already represent the final product, for example a forming wire. For other applications, further steps might be necessary to produce the final PMC, such as permanently attaching fibers thereto to form a press felt. Furthermore, the substrate may comprise a reinforcing structure, such as yarns, that may be imbedded therein. After joining the longitudinal ends of the substrate to each other, the "upper side" of the substrate shall be the radially outer side, sometimes also referred to as "paper side", whereas the "lower side" of the substrate shall be the radially inner side, sometimes also referred to as "machine side".

The idea of producing a PMC from a substrate that is perforated, especially by using a laser, is already known for quite a long time in the prior art and described e.g. in the 1980's and 1990's in the documents US4541895A and US 5,837,102, respectively. Figure 1 illustrates the processes of perforating a substrate via laser drilling according to the US 5,837,102 reference. Figure 1 only shows a portion of a substrate 20' used to produce a PMC forming fabric. The substrate 20' has a first surface 22' and an opposite second surface that is not shown in the figure. Even though the first surface 22' may be embossed it can be considered as being substantially plane and parallel to the second surface. The substrate 20' is perforated using a laser beam LB from a laser that is connected to a controller so as to drill a plurality of discrete through-channels 30' into the substrate 20'. The through-channels 30' connect the side of the first surface 22' with the side of the opposite second surface of the substrate 20'. The through-channels 30' extend in the thickness direction TD of the substrate 20', i.e. perpendicular to the first surface 22' and the second surface.

In the sense of the present invention the term "usable region" refers to a region of the PMC that is actually used for the production and/or finishing of the fiber web. The usable region may span the complete width of the PMC, i.e. may reach from one lateral edge to the other lateral edge thereof. Alternatively, the usable region may refer only to a region that is located between the two lateral edges and is spaced apart from the two lateral edges. In the latter case, the PMC may have another configuration, such as permeability and thickness, outside the usable region compared to the usable region.

The term "cross sectional area" of a through-channel in the sense of the present invention refers to an area of the through-channel that is obtained by cutting the through-channel with a plane that is perpendicular to the thickness direction of the substrate.

The term "non-cylindrical" in the sense of the present invention means that there are at least two different cross sectional areas of a through-channel. For example, in the case of a non-cylindrical through channel that is substantially conical, a cross sectional area taken at a first plane perpendicular to the thickness direction of the substrate may be substantially circular having a first radius, whereas another cross sectional area taken at a second plane perpendicular to the thickness direction of the substrate may be also substantially circular but having a second radius that differs from the first radius.

Another paper machine clothing is known for example from the disclosure of documents US 4,446,187 A and DE 10 2010 040 089 A1. Figures 2, 3a, 3b and 3c are based on the disclosure of the US 4,446,187 A reference.

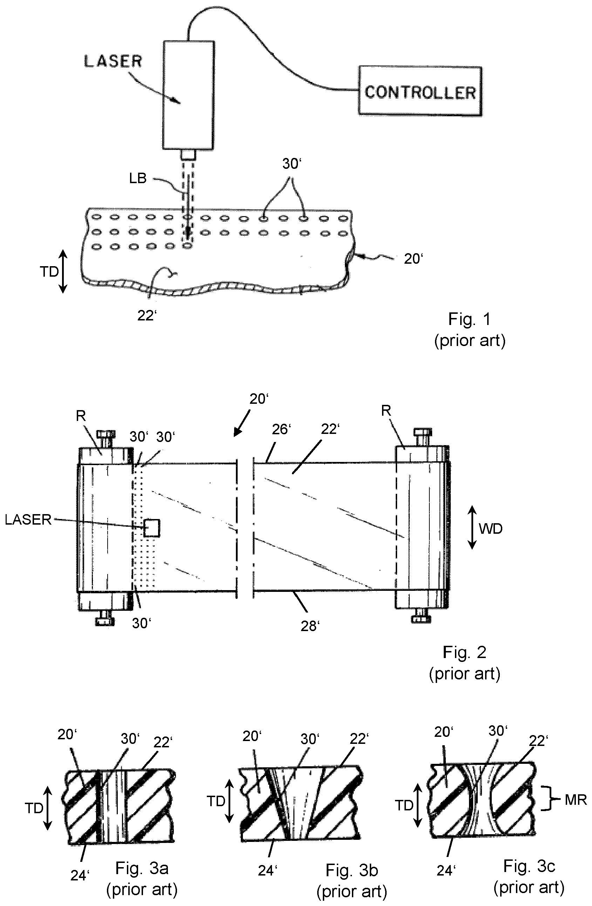

Figure 2 shows a substrate 20' that is placed under tension between two rollers R. The substrate 20' has a radially outer, first surface 22' and an opposite, radially inner, second surface 24', as can be seen in figures 3a, 3b and 3c. The first surface 22' and the second surface 24' are planar and parallel to each other. The thickness direction TD is oriented perpendicular to the first surface 22' and the second surface 24'. The substrate 20' further comprises a first lateral edge 26' and a second lateral edge 28'. In this example, the usable region of the substrate 20' extends in width direction WD of the substrate 20' the full way from the first lateral edge 26' to the second lateral edge 28'. In the usable region the substrate 20' is perforated by a laser that is drilling a plurality of discrete through-channels 30' into the substrate 20'. As indicated in Fig. 2 the laser first makes the through-channels 30' close to the first lateral edge 26' in a first row and continues moving across the substrate 20' to the through-channel 30' close to the second lateral edge 28' at the end of the same row. Thereafter, the laser is displaced by one row to make another through-channel 30' close to the first lateral edge 26' in a next row.

Figures 3a, 3b and 3c show different possible configurations of the through-channels 30'. In figure 3a the through-channel is cylindrical having the same cross sectional area at any location along the thickness direction TD of the substrate 20'. In figure 3b the through-channel 30' is conical wherein the cross sectional area of the through-channel 30' close to the first surface 22' is larger than the cross sectional area of the through-channel 30' close to the second surface 24'. In figure 3c the through-channel 30' is neither cylindrical nor conical. Instead it resembles a hyperboloid having a cross sectional area that is also always circular, like in the previous two examples, but the radius of this circle is first decreasing when going in thickness direction TD from the first surface 22' to a middle region MR of the substrate 20' situated in the thickness direction TD between the first surface 22' and the second surface 24', and is then increasing again when further going from the middle region MR of the substrate 20' to the second surface 24'.

Fiber retention, permeability and the degree of marking are characteristic parameters of a PMC that are important in view of the quality of the fiber web that is to be produced and/or finished on the PMC.

A paper machine clothing according to the preamble part of claim 1 is already known from the disclosure of documents EP3348708 A1 and EP3561176 A1 that were filed by the applicant earlier before. In these documents it is proposed to place neighboring through-channels so close to each other that their upper rims directly contact each other. The through-holes preferably "intersect" or "overlap" each other and, thus, make the topography of the upper surface of the substrate resemble the topography of an "egg box". With such a PMC a good permeability can be achieved with a high open area ratio on the paper side. This is especially important for good quality results of a nascent paper web when the PMC is used as a forming fabric.

However, the nascent paper web formed on a forming fabric is generally very prone to markings. Markings occur when the nascent paper web is not equally well dewatered over its complete surface. Especially in view of these markings, it turned out that the paper machine clothing disclosed in documents EP3348708 A1 and EP3561176 A1 might be even further improved.

Thus, it is an object of the present invention to provide a paper machine clothing with improved characteristics compared to the known paper machine clothing, thereby allowing to produce a fiber web of very high quality.

This object is achieved by a paper machine clothing according to the features of independent claim 1, as well as by a method of producing the same according to the features of independent claim 13. Advantageous embodiments are the subject-matter of the dependent claims.

Thus, according to the invention, a paper machine clothing as initially described and as recited in the preamble part of claim 1 is provided wherein the upper rims of both neighboring through-channels have at least one common local maximum, wherein a sectional plane being parallel to the thickness direction of the substrate, comprising the at least one common local maximum and comprising or intersecting the central axis of at least one of the two neighboring through-channels defines an intersecting line with a sidewall of the at least one of the two neighboring through-channels, and wherein the intersecting line comprises a first portion that is convexly shaped, a second portion that is concavely shaped and a third portion that is again convexly shaped when going in the thickness direction of the substrate from the at least one common local maximum toward the middle region of the substrate.

In the sense of the present invention the term "neighboring" could be replaced by the term "adjacent", meaning that there is no other through-channel placed between two neighboring or adjacent through-channels. Furthermore, in the sense of the present invention the term "upper rim" of a through-channel refers to the rim of the through-channel on the upper side of the substrate. The rim itself may be defined as a closed line where the sidewall of the through-channel ends. In view of the previously described examples of the prior art shown in figures 1 to 3c, the upper rim can be easily identified, always being completely surrounded by the first surface 22'. To be more specific, in these examples, the upper rim is always a circular line lying within the plane of the first surface 22' of the substrate 20'. In contrast, according to embodiments disclosed in EP3348708 A1 and EP3561176 A1, the upper rim of a through-channel does not lie within a plane. In some of these embodiments, the upper rim is partially be surrounded or defined by portions of the still existing first surface of the substrate and partially by the sidewall of at least one neighboring through-channel. Especially the portions of the still existing first surface of the substrate can contribute to markings of the nascent paper web formed on the PMC when the PMC is used as forming fabric. The nascent paper web lies flat on these portions and dewatering there is consequently more difficult compared to other portions where the nascent paper web is "hanging" over the openings of the through-channels..

It is the merit of the inventors to have found out that this problem can be solved by providing some kind of "pin-like-structure" forming a common local maximum of the rims of neighboring through-channels and functioning as some kind of fiber-support-points for the nascent paper web. With this "pin-like-structure" there is only a very small contact area between the nascent paper web and the PMC allowing the nascent paper web to be substantially equally dewatered over its complete surface. Thus, markings can be avoided.

The "pin-like-structure" can be described by its geometrical properties according the features in the characterizing portion of claim 1. The "common local maximum" preferably represents a point of the topography of the upper side of the substrate that is like an apex or a mount peak and from which the surface of the upper side declines in all directions. Furthermore, the three portions of the intersecting line, namely the first portion that is convexly shaped, the second portion that is concavely shaped and the third portion that is again convexly shaped when going in the thickness direction of the substrate from the at least one common local maximum toward the middle region of the substrate are preferably directly connected to each other. In other words, the first portion is preferably directly connected to the second portion at a first inflection point and the second portion is directly connected to the third portion at a second inflection point.

Preferably, the above description of the three portions of the intersecting line does not only apply to the intersection line that is defined by a sectional plane that comprises or intersects the central axis of at least one of the two neighboring through-channels, but applies to all intersection lines that are defined by any sectional plane that is parallel to the thickness direction of the substrate and that comprises the at least one common local maximum, no matter if this sectional plane also comprises or intersects the central axis of at least one of the two neighboring through-channels. In other words, it is proposed that the intersecting line that is defined by intersecting the substrate with a sectional plane being parallel to the thickness direction of the substrate and comprising the at least one common local maximum comprises a first portion that is convexly shaped, a second portion that is concavely shaped and a third portion that is again convexly shaped when going in the thickness direction of the substrate from the at least one common local maximum toward the middle region of the substrate.

Furthermore, it is proposed that a first inflection point that is located between the first portion and the second portion of the intersecting line, and preferably also a second inflection point that is located between the second portion and the third portion of the intersecting line, is/are located close to the at least one local maximum, i.e. in the upper fourth, preferably in the upper fifth, more preferably in the upper sixth, of the substrate. In other words, the dimension or height of the "pin-like-structure" is preferably rather small compared to the overall dimension or height of the substrate in its thickness direction. It is not the aim of the "pin-like-structure" e.g. to contribute to the tensile strength of the substrate, but to provide some kind of fiber support point for the nascent fiber web, so as to allow for a good dewatering of the PMC substantially over the complete surface of the nascent fiber web. Consequently, the "pin-like-structure" does not need to be or even should not have a large dimension or height.

In a preferred embodiment of the present invention at least 90%, preferably all, of the through-channels in the usable region of the substrate have an upper rim that directly contacts an upper rim of at least one other neighboring through-channel, preferably of all other neighboring through-channels, of the plurality of through-channels in the usable region of the substrate, wherein the upper rims of the majority, preferably of all, of these directly neighboring through channels have at least one common local maximum, wherein a sectional plane being parallel to the thickness direction of the substrate, comprising the at least one common local maximum and comprising or intersecting the central axis of at least one of the corresponding neighboring through-channels defines an intersecting line with a sidewall of the one of the corresponding neighboring through-channels, and wherein the intersecting line comprises a first portion that is convexly shaped, a second portion that is concavely shaped and a third portion that is again convexly shaped when going in the thickness direction of the substrate from the at least one common local maximum toward the middle region of the substrate. In other words, it is preferred that almost all or all local maxima that are defined by corresponding neighboring through-channels in the usable region exhibit a "pin-like-structure" as described above.

Furthermore, it is advantageous if less than 5%, preferably 0%, of a surface on the upper side of the substrate in its usable region is flat and substantially orthogonal to the thickness direction of the substrate. In other words, it is preferred if hardly any portion of the original first surface of the substrate, that was existing before the perforation process, is left after the perforation process.

In contrast to the first surface, with respect to the second surface of the substrate, it is advantageous, if between 70% and 90%, preferably between 75% and 85%, and more preferably about 80%, of a surface on the lower side of the substrate is flat and substantially orthogonal to the thickness direction of the substrate. Such a result can be achieved if the cross sectional area of the through-channels is smaller on the lower side of the substrate compared to the upper side of the substrate. For example, the through-channels may be substantially funnel-shaped tapering to the lower side of the substrate.

According to one embodiment of the present invention, the cross sectional area of at least one through-channel, preferably of all through-channels, of the plurality of through-channels in the usable region of the substrate may continuously decreases when going in the thickness direction of the substrate from the upper side to the lower side of the substrate.

According to an alternative embodiment of the present invention, the cross sectional area of at least one through-channel, preferably of all through-channels, of the plurality of through-channels in the usable region of the substrate continuously increases again when going in the thickness direction of the substrate from the middle region of the substrate between the upper side and the lower side to the lower side of the substrate. With such a configuration, the respective through-channel resembles the through-channel shown in figure 3c and the dewatering capability of the PMC may be enhanced by using the effect of a nozzle.

It is also possible to have in the same substrate a mixture of through-channels according to the two previously described embodiments.

Another advantageous feature of the present invention concerns the aspect that a shape of the cross sectional area of at least one through-channel, preferably of all through-channels, of the plurality of through-channels can change when going in the thickness direction of the substrate from the upper side to the lower side.

Advantageously, the shape of the cross sectional area is substantially more elliptical in an upper region of the through-channel than in a lower region of the through-channel. In mathematics, an ellipse is a curve in a plane surrounding two focal points such that the sum of the distances to the two focal points is constant for every point on the curve. As such, it is a generalization of a circle, which is a special type of an ellipse having both focal points at the same location. The shape of an ellipse (how "elongated" it is) is represented by its eccentricity, which for an ellipse can be any number from 0 (the limiting case of a circle) to arbitrarily close to but less than 1. Consequently, "the cross sectional area being substantially more elliptical in an upper region of the through-channel than in a lower region of the through-channel" means that the shape of the cross sectional area changes as the eccentricity of the substantially elliptically shaped cross sectional area in the upper region of the through-channel is larger than the eccentricity of the substantially elliptically shaped cross sectional area in the lower region of the through-channel, wherein the latter one might be even 0 (corresponding to a circle). Thereby, the value of the eccentricity may diminish continuously in thickness direction.

Of course, the terms "elliptical" and "circular" when used in view of the cross sectional areas of the through-channels must not be understood in a strict mathematical way but some deviations, e.g. due to manufacturing tolerances, are allowed. Therefore, the term "elliptical" may be rather understood as "oval" as also described in prior art documents WO 91/02642 A1 and WO 2010/088283 A1.

In view of the through-channels 30' described with respect to figures 3a, 3b and 3c, the basic shape of the cross sectional area of the through-channels 30' is always the same, i.e. circular. However, it turned out to be advantageous - for reasons explained in more detail below - if the cross sectional area of the through-channels 30' changes along the thickness direction of the substrate, in particular if the cross sectional area is more elliptical close to the upper side of the substrate than in the lower side of the substrate. If the through-channels are drilled by a laser, such a form of the through-channels can be achieved for example by not shutting off of the laser or by at least not shutting off completely the laser when advancing with the laser from one through-channel to the next neighboring through-channel in a row. Applying this method can result in that the upper rim of a through-channel is deeper below the original first surface of the substrate at a point between two neighboring through-channels in the direction of advancement of the laser compared to a point between two neighboring through-channels in a direction perpendicular thereto.

With the above described aspect of the present invention it is possible to impart anisotropic properties to the substrate in a beneficial way. For example, it is proposed that the shape of the cross sectional area in the upper region of the through-channel has a first dimension extending in cross-machine direction and a second dimension extending in machine direction, wherein the first dimension is smaller than the second dimension. With such a configuration of the through-channels the substrate, and thus the final paper machine clothing, can stand higher stress in the machine direction compared to the cross machine direction, wherein stresses that act on the paper machine clothing are usually in fact much higher in the machine direction than in the cross machine direction. As it is clear to those skilled in the art, the term "machine direction" refers to the longitudinal direction of the PMC, i.e. the direction of transportation of the fiber web or the fibrous nonwoven when the PMC is installed in a corresponding machine, whereas the term "cross machine direction" refers to a direction within the plane of the PMC that is perpendicular to the machine direction.

In an alternative embodiment it is proposed that the shape of the cross sectional area in the upper region of the through-channel has a first dimension extending in cross-machine direction and a second dimension extending in machine direction, wherein the first dimension is larger than the second dimension. Such a form of the through-channels is particularly beneficial if the fiber retention on the paper machine clothing, in particular a forming fabric, shall be enhanced.

The first dimension and the second dimension preferably differ from each other by at least 5%, more preferably by at least 10%, and even more preferably by at least 15%, of the respective smaller dimension.

Preferably, on the lower side of the substrate the shape of the cross sectional area is substantially circular.

In order to increase the density of through-channels in the usable region of the substrate, and thus, to enhance the dewatering capability of the paper machine clothing, it is suggested that at least 90% of all through-channels in the usable region of the substrate are arranged in a non-checkered pattern. Arranging the through-channels in a checkered pattern would mean that the through-channels are evenly distributed in the usable region of the PMC like the fields of a classic chess-board. In contrast to this, arranging the through-channels in a non-checkered pattern means that the through-channels are distributed differently.

According to another aspect, the present invention also refers to a method of producing the paper machine clothing as previously described comprising the following steps: providing a substrate having a first surface and a second surface, wherein the first surface and the second surface are preferably planar and parallel to each other; and forming a plurality of non-cylindrical through holes into a usable region of the substrate by using a laser, wherein at least some, preferably all, of the plurality of through holes that are neighboring each other are formed at such a close distance that they partially overlap each other, wherein during the formation of the plurality of non-cylindrical through holes the laser is controlled in such a way that the upper rims of the overlapping through-holes have at least one common local maximum, wherein a sectional plane being parallel to the thickness direction of the substrate, comprising the at least one common local maximum and comprising or intersecting the central axis of at least one of the overlapping through-holes defines an intersecting line with a sidewall of the at least one of the overlapping through-holes, and wherein the intersecting line comprises a first portion that is convexly shaped, a second portion that is concavely shaped and a third portion that is again convexly shaped when going in the thickness direction of the substrate from the at least one common local maximum toward the middle region of the substrate.

The inventors have found out that the "pin-like-structure" can be created relatively easily during the perforation of the substrate via a laser, by correspondingly adjusting the power of the laser, the pulse length and the location of the focus of the laser. Thus, it is possible to make part of the material that is evaporated by the laser to condense again, thereby forming "pin-like-structure".

The term "through hole" in the sense of the present invention refers to the form of a hole that is formed in the substrate neglecting the neighboring through holes that may partially overlap. In contrast, the term "through-channel" refers to the geometric form of the channels in the finally drilled substrate. Due to the fact that neighboring through holes may overlap each other according to the present invention, its form, especially in view of its upper rim, can differ from the form of the through-channels.

According to one embodiment of the present invention it is proposed that, when all the through holes have been formed into the usable region of the substrate, at least one of the first surface and the second surface in the usable region has disappeared by at least 90%, preferably by 100%. As result the finally drilled substrate has none or hardly any opposite surface portions that are planar and parallel to each other.

Preferably cold air is blown onto the substrate during the step of forming the through holes into the substrate. The cold air inhibits overheating and damaging of the substrate material, which is particularly important for the material region between two neighboring through holes when the laser is advancing from the first of the two through holes to the second one.

In the following, the invention will be explained with respect to some schematic drawings that are not true to scale, wherein:
- Figure 4: shows a section of a substrate comprising a single through hole of a first type;
- Figure 4a: shows an enlarged view of the through hole in Fig. 4;
- Figure 5: shows a section of a substrate comprising a single through hole of a second type;
- Figure 5a: shows an enlarged view of the through hole in Fig. 5;
- Figure 6: shows a sectional view along lines A-A and B-B in Fig. 4 and along line C-C in Fig. 5;
- Figure 7: shows a sectional view along line D-D in Fig. 5;
- Figure 8: shows a section of a substrate comprising a plurality of through holes of the first type;
- Figure 9: shows a section of a substrate comprising a plurality through holes of the second type;
- Figure 10: shows a sectional view along lines E-E and F-F in Fig. 8 and along line G-G in Fig. 9;
- Figure 11: shows a sectional view along line H-H in Fig. 9;
- Figure 12: shows a sectional view similar to the sectional view of Fig. 10, but with a third type of through holes;
- Figure 13: shows a section of a substrate similar to the one shown in Figure 8, but with the through holes are arranged in a non-checkered pattern;
- Figure 14: shows a section of a substrate similar to the one shown in Figure 9, but with the through holes are arranged in a non-checkered pattern;
- Figure 15: shows a section of a substrate comprising a plurality of through holes of a forth type;
- Figure 16: also shows a section of a substrate comprising a plurality of through holes of the forth type;
- Figure 17: shows a sectional view along lines J-J and K-K in Fig. 15;
- Figure 17a: shows an enlarged view of a "pin-like-structure" in Fig. 17;
- Figure 18: shows a sectional view along lines L-L and M-M in Fig. 16; and
- Figure 18a: shows an enlarged view of a "pin-like-structure" in Fig. 18.

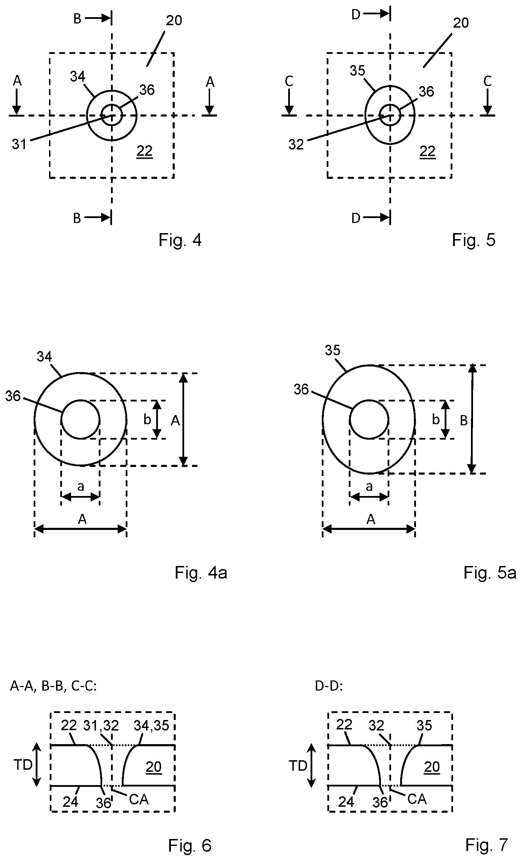

Figure 4 shows a section of a substrate 20 which section is indicated by a dashed square. The substrate 20 comprises a first surface 22 and an opposite second surface 24 (see figure 6), wherein the first surface 22 and the second surface 24 are substantially planar and parallel to each other.

A single through hole 31 of a first type is provided in the center of the section of the substrate 20. Figure 6 shows a cross sectional view which is taken through the through hole 31 along line A-A or line B-B of figure 4. As can be seen from figures 4 and 6, the through hole 31 extends through the substrate 20 in its thickness direction TD along a central axis CA of the through hole 31, the central axis CA being indicated by a dashed line in figure 6. Thus, the through hole 31 connects the first surface 22 with the second surface 24 of the substrate 20. The through hole 31 is substantially funnel shaped with a cross sectional area becoming continuously smaller when going in the thickness direction TD from the first surface 22 to the second surface 24. The cross sectional area of a through hole 31 is obtained by cutting the through hole 31 with a plane that is oriented perpendicular to the thickness direction TD of the substrate 20. In this embodiment the shape of the cross sectional area of the through hole 31 is always circular, no matter at which height level of the substrate the cross sectional area is taken.

The through hole 31 has a circular upper rim 34 where a sidewall of the through hole 31 ends and the flat first surface 22 begins. The circular upper rim 34 has a diameter A, as shown in figure 4a. Furthermore, the through hole 31 has a circular lower rim 36 where the sidewall of the through hole 31 ends and the flat second surface 24 begins. The circular lower rim 36 has a diameter a, as also shown in figure 4a. Diameter A of the upper rim is larger than diameter a of the lower rim.

Figure 5 shows another section of a substrate 20 which section is also indicated by a dashed square. The substrate 20 comprises a first surface 22 and a second surface 24 (see figure 7), wherein the first surface 22 and the second surface 24 are substantially planar and parallel to each other.

A single through hole 32 of a second type is provided in the center of the section of the substrate 20. Figure 6 shows a cross sectional view which is taken through the through hole 32 along line C-C of figure 5 and figure 7 shows a cross sectional view which is taken through the through hole 32 along line D-D of figure 5. As can be seen from figures 5, 6 and 7, the through hole 32 extends through the substrate 20 in its thickness direction TD along a central axis CA of the through hole 32, the central axis CA being indicated by a dashed line in figures 6 and 7. Thus, the through hole 32 connects the first surface 22 with the second surface 24 of the substrate 20. The through hole 32 is substantially funnel shaped with a cross sectional area becoming continuously smaller when going in a thickness direction TD from the first surface 22 to the second surface 24. The cross sectional area of the through hole 32 is obtained by cutting the through hole 32 with a plane that is oriented perpendicular to the thickness direction TD of the substrate 20. In this embodiment the shape of the cross sectional area of the through hole 32 is not constant but changes when going along the thickness direction TD of the through hole 32. In an upper region of the substrate 20, i.e. in a region close to the first surface 22, the through hole 32 is more oval or elliptical, whereas in a lower region of the substrate 20, i.e. in a region close to the second surface 24, the through hole 32 is more or completely circular. The shape of the cross sectional area of the through hole 32 preferably changes continuously along the thickness direction TD of the substrate 20.

Thus, the through hole 32 has an elliptical upper rim 35 where a sidewall of the through hole 32 ends and the flat first surface 22 begins. The elliptical upper rim 35 has a first diameter A and a second diameter B measured orthogonally thereto, as indicated in figure 5a. Furthermore, the through hole 32 has a circular lower rim 36 where the sidewall of the through hole 32 ends and the flat second surface 24 begins. The circular lower rim 36 has a diameter a, as also shown in figure 5a. The second diameter B of the upper rim 35 is larger than the first diameter A of the upper rim 35. The first diameter A of the upper rim 35 is larger than the diameter a of the lower rim 36. Preferably, the second diameter B of the upper rim 35 is at least 5%, more preferably at least 10%, even more preferably at least 15% larger than the first diameter A of the upper rim 35.

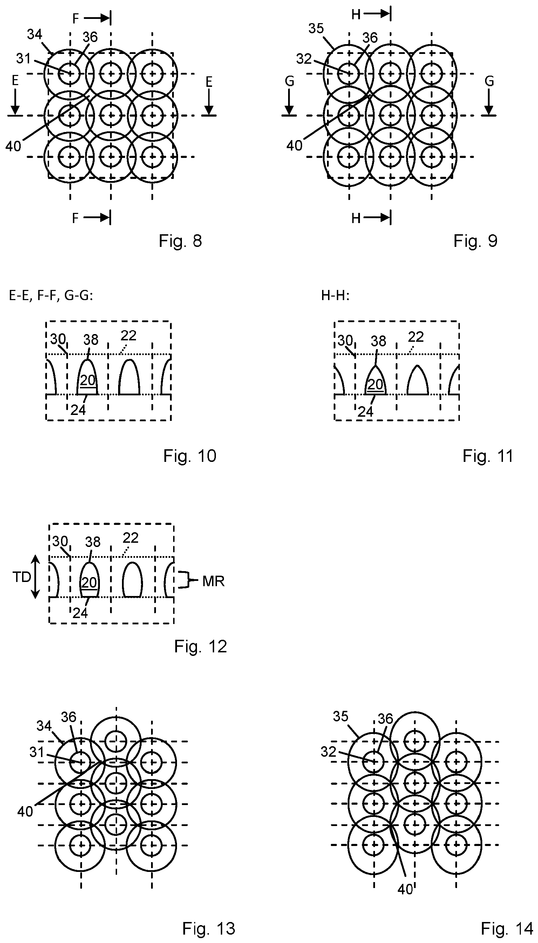

Several of such non-cylindrical through holes are arranged in such a close relationship that they partially overlap each other in the substrate. Examples of such arrangements for the through holes 31 of the first type and the through holes 32 of the second type are shown in figures 8 and 9, respectively. To be more precise, nine corresponding through holes 31, 32 arranged in a checkered pattern are shown in these figures. The through holes 31, 32 each have a respective lower rim 36. Furthermore, for the sake of clarity, also the corresponding upper rims 34, 35 of the through holes 31, 32 are shown, even though these upper rims 34, 35 do not exist anymore as such in the final product. Instead, in the final product, i.e. in the finally perforated substrate 20, through-channels 30 are formed having a respective upper rim 38 that is at least partially delimited by the upper rim 38 of a neighboring through-channel 30. As shown in figures 8 and 9, the originally existing flat or planar first surface 22 of the substrate 20 has completely disappeared after the perforation of the substrate 20 in the usable region UR thereof. The reason for the complete disappearance of the originally flat first surface 22 of the substrate 20 is that the through holes 31, 32 have been laser-drilled and that the material of the substrate 20 that has been evaporated by the energy of the laser at least partially condenses again on the first surface 22, thus forming a "pin-like-structure" 40 that will be explained in more detail below. As a consequence, the upper rim 38 of a corresponding through-channel 30 does not extend within a plane but is rather a closed line that extends three-dimensionally. It should be noted that the upper rim 38 of the through-channel 30 may extend partially below the originally flat first surface 22 of the substrate 20 and/or extend partially above the originally flat first surface 22 of the substrate 20.

Figures 10 and 11 represent views similar to the ones shown in figures 6 and 7, respectively, but now with several neighboring through holes 31, 32 that form the through-channels 30 in the substrate 20 of the final product. In figure 10 a location (see reference sign 38) of the upper rim 38 of the through-channel 30 of figure 8 is shown that represents an absolute minimum of the upper rim 38. In other words, the upper rim 38 has the largest distance to the originally flat first surface 22 of the substrate 20 which surface 22 is indicated by a dotted line in figure 10. The surface of the substrate 20 has a saddle point at this location of the upper rim 38.

In figure 11 a location (see reference sign 38) of the upper rim 38 of the through-channel 30 of figure 9 is shown (according to the section along line H-H of figure 9) that represents an absolute minimum of the upper rim 38 of this through-channel 30. In other words, the upper rim 38 has the largest distance to the originally flat first surface 22 of the substrate 20 which surface 22 is also indicated by a dotted line in figure 11. The surface of the substrate 20 has a saddle point at this location of the upper rim 38. A section along line G-G of figure 9 is represented by the drawing of figure 10. At the location of the upper rim 38 shown in this figure, the upper rim only has a local minimum. Thus, the ridges that separate two neighboring through-channels 30 from each other are higher when following the line G-G compared to the ridges when following the line H-H of figure 9. Consequently, the substrate has anisotropic properties.

These anisotropic properties can be used in a beneficial way. For example, the substrate that is perforated in a way as shown in figures 9, 10 and 11 is more stress resistant in the direction parallel to line H-H compared to the direction parallel to line G-G. If line H-H substantially represents the machine direction of the final paper machine clothing the relatively high forces in the machine direction can be absorbed by the substrate 20 while at the same time the substrate 20 provides a relatively large open area on its upper side. Alternatively, if line H-H substantially represents the cross machine direction of the final paper machine clothing the nascent paper web in a forming section can adhere better to the substrate 20 since ridges formed in the substrate 20 between neighboring rows of through channels 30 that extend in cross machine direction are higher than those extending in the machine direction. Consequently, the properties of the substrate 20 can be adjusted to the intended use or the requirements of the paper machine clothing.

Figure 12 shows a sectional view similar to the cross sectional view of figure 10, but of a third type of through holes. This third type of through holes differs from the first and second type of through holes 31, 32 in that the cross sectional area of the through hole of the third type and, thus, the cross sectional area of the corresponding through-channel 30 that is created thereof, continuously increase again when going in the thickness direction TD of the substrate 20 from the middle region MR of the substrate 20 between the upper side and the lower side to the lower side of the substrate 20. In an extreme case, neighboring through holes may not only partially overlap each other on the first side 22 of the substrate 20 but also on the second side 24 thereof.

Figures 13 and 14 show a section of a substrate 20 similar to the one shown in figures 8 and 9, respectively, with the difference that the through holes 31, 32 are arranged in a non-checkered pattern. In figures 8 and 9 each through hole 31, 32 has eight neighboring other through holes 31, 32 wherein the distance to four of these eight neighboring through holes 31, 32 is larger than the distance to the remaining four neighboring through holes 31, 32.

In contrast, in the examples shown in figures 13 and 14, each through hole 31, 32 has six neighboring other through holes 31, 32 wherein the distance to all these neighboring through holes 31, 32 is substantially the same (for example corresponding to the smaller distance of the embodiments shown in figures 8 and 9). These six neighboring through holes 31, 32 are arranged in a honeycomb pattern around a corresponding through hole 31, 32 in the middle thereof. With such an arrangement, the density of through-channels 31 in the final substrate 20 can be increased, as well as the open area on the upper side of the substrate 20.

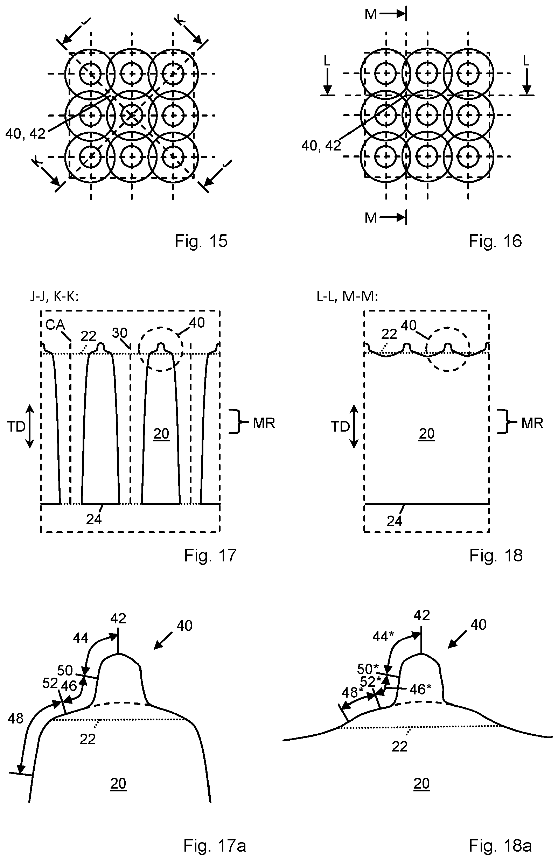

Figures 15 and 16 each shows a section of a substrate comprising a plurality of through holes of a forth type. Figures 15 and 16 are substantially identical to figure 8 which shows a section of a substrate comprising a plurality of through holes of a first type. However, the holes of the forth type are longer (or the substrate has a larger thickness) compared to the holes of the first type as can be seen by comparing figures 17 and 18 with figure 10. It should be noted that this difference is not decisive for the effect of the present invention, especially when taking into account that the figures only represent only schematic drawings anyway. Therefore, the following description of figures 16-18a may equally refer to the embodiment shown in figure 8. Figure 17 represents a sectional view along lines J-J and K-K of figure 15 and figure 18 represents a sectional view along lines L-L and M-M of figure 16. In figures 17 and 18 a detail referring to the "pin-like-structure" 40 is emphasized with a dashed circle and this detail is shown in enlarged views in figures 17a and 18a, respectively.

Lines J-J and K-K in figure 15 each describes a sectional plane that is parallel to the thickness direction TD of the substrate 20, that comprises the central axis CA of at least one of two neighboring through-channels 30 the upper rims of which have at least one local maximum 42 in common, and that comprises the at least one local maximum 42. The local maximum 42 is illustrated in detail in figures 17a and 18a, and might be compared to an apex or a mount peak from which the surface of the upper side of the substrate 20 declines in all directions.

According to the present invention, the outline of the substrate 20 in the sectional view of figures 17 and 17a comprises a first portion 44 that is convexly shaped, a second portion 46 that is concavely shaped and a third portion 48 that is again convexly shaped when going in the thickness direction TD of the substrate 20 from the at least one common local maximum 42 toward the middle region MR of the substrate 20. In this exemplary embodiment, the first portion 44 is directly connected to the second portion 46 at a first inflection point 50 and the second portion 46 is directly connected to the third portion 48 at a second inflection point 52. In in the sectional view of figures 17 and 17a the "pin-like-structure" 40 has a substantially symmetrical outline. Therefore, the outline does not only comprise a first, second and third portion 44, 46, 48 as described above on the left hand side in figure 17a but also on the right hand side in this figure. It should be noted, however, that the outline of the "pin-like-structure" 40 as shown in figures 17 and 17a does not have to be symmetrical. For example it is possible that the outline is somehow deformed to one side.

Lines L-L and M-M in figure 16 each describes a sectional plane that is parallel to the thickness direction TD of the substrate 20, and that comprises the at least one local maximum 42. However, this sectional plane - in contrast to the one shown in figures 17 and 17a - does neither comprise nor intersect the central axis CA of any of the shown through-channels 30. As shown in figures 18 and 18a also the outline of the substrate 20 in this sectional plane comprises a first portion 44* that is convexly shaped, a second portion 46* that is concavely shaped and a third portion 48* that is again convexly shaped when going in the thickness direction TD of the substrate 20 from the at least one common local maximum 42 toward the middle region MR of the substrate 20. In this exemplary embodiment, the first portion 44* is directly connected to the second portion 46* at a first inflection point 50* and the second portion 46* is directly connected to the third portion 48* at a second inflection point 52*. In in the sectional view of figures 18 and 18a the "pin-like-structure" 40 has also a substantially symmetrical outline. Therefore, the outline does not only comprise a first, second and third portion 44*, 46*, 48* as described above on the left hand side in figure 18a but also on the right hand side in this figure. It should be noted, however, that the outline of the "pin-like-structure" 40 as shown in figures 18 and 18a does not have to be symmetrical. For example it is possible that the outline is somehow deformed to one side. Preferably, any outline of the substrate in the region of the "pin-like-structure" 40 comprises a first portion that is convexly shaped, a second portion that is concavely shaped and a third portion that is again convexly shaped when going in the thickness direction TD of the substrate 20 from the at least one common local maximum toward the middle region MR of the substrate 20, no matter what sectional plane has been chosen to define the outline, as long as the sectional plane is parallel to the thickness direction TD of the substrate 20 and comprises the local maximum 42.

In figures 17, 17a, 18 and 18a, a dotted line indicates the original first surface 22 of the substrate 20. Preferably, the material that is located above this dotted line in the final product is material that has first been evaporated during the formation of the through-channels 30 by laser-drilling and has then been condensed again. The inventors have found out that by correspondingly adjusting parameters, such as the power of the laser, the pulse length and the location of the focus of the laser, it is possible to create the "pin-like-structure" 40 relatively easily during the perforation of the substrate.

In laser drilled substrates known from the prior art, there is either no material above the dotted line that represents the original first surface 22 of the substrate 20, or there is material above this line, but only in the form of a smooth hill or ridge as indicated by a dashed line in figures 17a and 18a. However, the formation of the "pin-like-structure" 40 is not know from the prior art.

The "pin-like-structure" 40 is advantageous because - especially when the laser drilled substrate is used as a forming fabric - it supports the fiber web punctually, thus providing a very good and equal dewatering for the fiber web substantially over its complete surface, thus, avoiding markings.

### list of reference signs:

- 20', 20: substrate
- 22', 22: first surface
- 24', 24: second surface
- 26': first lateral edge
- 28': second lateral edge
- 30', 30: through-channel
- 31: through hole of first type
- 32: through hole of second type
- 34: circular upper rim of through hole
- 35: elliptical upper rim of through hole
- 36: circular lower rim of through hole
- 38: upper rim of through-channel
- 40: pin-like-structure
- 42: local maximum
- 44, 44*: first portion that is convexly shaped
- 46, 46*: second portion that is concavely shaped
- 48, 48*: third portion that is convexly shaped
- 50; 50*: first inflection point
- 52; 52*: second inflection point

- a, b: diameter of lower rim
- A, B: diameter of upper rim
- CA: central axis
- LB: laser beam
- MR: middle region
- R: roller
- TD: thickness direction
- WD: width direction

## Claims

1. Paper machine clothing comprising a substrate (20) with an upper side, a lower side, two lateral edges and an usable region (UR) between the two lateral edges, wherein the usable region (UR) comprises a plurality of through-channels (30) each extending along a central axis (CA) through the substrate (20) and connecting the upper side with the lower side, wherein the through-channels (30) are non-cylindrical with a cross sectional area becoming smaller when going in a thickness direction (TD) of the substrate (20) from the upper side to a middle region (MR) of the substrate (20) between the upper side and the lower side,
and wherein an upper rim (38) of at least one of the plurality of through-channels (30) directly contacts an upper rim (38) of at least one other neighboring through-channel (30) of the plurality of through-channels (30),
**characterized in that** the upper rims (38) of both neighboring through-channels (30) have at least one common local maximum (42),
wherein a sectional plane being parallel to the thickness direction (TD) of the substrate (20), comprising the at least one common local maximum (42) and comprising or intersecting the central axis (CA) of at least one of the two neighboring through-channels (30) defines an intersecting line with a sidewall of the at least one of the two neighboring through-channels (30),
and wherein the intersecting line comprises a first portion (44) that is convexly shaped, a second portion (46) that is concavely shaped and a third portion (48) that is again convexly shaped when going in the thickness direction (TD) of the substrate (20) from the at least one common local maximum (42) toward the middle region (MR) of the substrate (20).

2. Paper machine clothing according to claim 1, wherein any intersecting line that is defined by intersecting the substrate (20) with a sectional plane being parallel to the thickness direction (TD) of the substrate (20) and comprising the at least one common local maximum (42) comprises a first portion (44, 44*) that is convexly shaped, a second portion (46, 46*) that is concavely shaped and a third portion (48, 48*) that is again convexly shaped when going in the thickness direction (TD) of the substrate (20) from the at least one common local maximum (42) toward the middle region (MR) of the substrate (20).

3. Paper machine clothing according to claim 1 or 2, wherein a first inflection point (50, 50*) that is located between the first portion (44, 44*) and the second portion (46, 46*) of the intersecting line, and preferably also a second inflection point (52, 52*) that is located between the second portion (46, 46*) and the third portion (48, 48*) of the intersecting line, is/are located close to the at least one local maximum (42), i.e. in the upper fourth, preferably in the upper fifth, more preferably in the upper sixth, of the substrate (20).

4. Paper machine clothing according to one of the preceding claims, wherein at least 90%, preferably all, of the through-channels (30) in the usable region (UR) of the substrate (UR) have an upper rim (38) that directly contacts an upper rim (38) of at least one other neighboring through-channel (30), preferably of all other neighboring through-channels (30), of the plurality of through-channels (30) in the usable region (UR) of the substrate (20) and wherein the upper rims (38) of the majority, preferably of all, of these directly neighboring through channels (30) have at least one common local maximum (42),
wherein a sectional plane being parallel to the thickness direction (TD) of the substrate (20), comprising the at least one common local maximum (42) and comprising or intersecting the central axis (CA) of at least one of the corresponding neighboring through-channels (30) defines an intersecting line with a sidewall of the one of the corresponding neighboring through-channels (30),
wherein the intersecting line comprises a first portion (44) that is convexly shaped, a second portion (46) that is concavely shaped and a third portion (48) that is again convexly shaped when going in the thickness direction (TD) of the substrate (20) from the at least one common local maximum toward the middle region (MR) of the substrate (20).

5. Paper machine clothing according to one of the preceding claims, wherein less than 5%, preferably 0%, of a surface (20) on the upper side of the substrate (20) in its usable region is flat and substantially orthogonal to the thickness direction (TD) of the substrate (20).

6. Paper machine clothing according to one of the preceding claims, wherein between 70% and 90%, preferably between 75% and 85%, and more preferably about 80%, of a surface (24) on the lower side of the substrate (20) is flat and substantially orthogonal to the thickness direction (TD) of the substrate (20).

7. Paper machine clothing according to one of the preceding claims, wherein a shape of the cross sectional area of at least one through-channel (30), preferably of all through-channels (30), of the plurality of through-channels (30) changes when going in the thickness direction (TD) of the substrate (20) from the upper side to the lower side.

8. Paper machine clothing according to claim 7, wherein the shape of the cross sectional area is substantially more elliptical in an upper region of the through-channel (30) than in a lower region of the through-channel (30).

9. Paper machine clothing according to claim 8, wherein the shape of the cross sectional area in the upper region of the through-channel (30) has a first dimension extending in cross-machine direction and a second dimension extending in machine direction, wherein the first dimension is smaller than the second dimension.

10. Paper machine clothing according to claim 8, wherein the shape of the cross sectional area in the upper region of the through-channel (30) has a first dimension extending in cross-machine direction and a second dimension extending in machine direction, wherein the first dimension is larger than the second dimension.

11. Paper machine clothing according to one of claims 7 to 10, wherein on the lower side of the substrate (20) the shape of the cross sectional area is substantially circular.

12. Paper machine clothing according to one of the preceding claims, wherein at least 90% of all through-channels (30) in the usable region (UR) of the substrate (20) are arranged in a non-checkered pattern.

13. Method of producing the paper machine clothing according to one of the preceding claims comprising the following steps:
- providing a substrate (20) having a first surface (22) and a second surface (24), wherein the first surface (22) and the second surface (24) are preferably planar and parallel to each other; and
- forming a plurality of non-cylindrical through holes (31, 32) into a usable region (UR) of the substrate (20) by using a laser,
wherein at least some, preferably all, of the plurality of through holes (30) that are neighboring each other are formed at such a close distance that they partially overlap each other,
wherein during the formation of the plurality of non-cylindrical through holes (31, 32) the laser is controlled in such a way that the upper rims (38) of the overlapping through-holes (30) have at least one common local maximum (42),
wherein a sectional plane being parallel to the thickness direction (TD) of the substrate (20), comprising the at least one common local maximum (42) and comprising or intersecting the central axis (CA) of at least one of the overlapping through-holes (30) defines an intersecting line with a sidewall of the at least one of the overlapping through-holes (30),
and wherein the intersecting line comprises a first portion (44) that is convexly shaped, a second portion (46) that is concavely shaped and a third portion (48) that is again convexly shaped when going in the thickness direction (TD) of the substrate (20) from the at least one common local maximum (42) toward the middle region (MR) of the substrate (20).

14. Method according to claim 13, wherein, when all the through holes (30) have been formed into the usable region (UR) of the substrate (20), at least one of the first surface (22) and the second surface (24) in the usable region (UR) has disappeared by at least 90%, preferably by 100%.

15. Method according to claim 13 or 14, wherein cold air is blown onto the substrate (20) during the step of forming the through holes (31, 32) into the substrate (20).

## Patentansprüche

1. Papiermaschinenbespannung, umfassend ein Substrat (20) mit einer Oberseite, einer Unterseite, zwei Seitenkanten und einem nutzbaren Bereich (UR) zwischen den beiden Seitenkanten, wobei der nutzbare Bereich (UR) eine Mehrzahl von Durchgangskanälen (30) umfasst, die sich jeweils entlang einer Zentralachse (CA) durch das Substrat (20) hindurch erstrecken und die Oberseite mit der Unterseite verbinden, wobei die Durchgangskanäle (30) nicht-zylindrisch sind, wobei eine Querschnittfläche kleiner wird, wenn man von der Oberseite in einer Dickenrichtung (TD) des Substrats (20) zu einem mittleren Bereich (MR) des Substrats (20) zwischen der Oberseite und der Unterseite geht,
und wobei ein oberer Rand (38) von mindestens einem der Mehrzahl von Durchgangskanälen (30) direkt mit einem oberen Rand (38) von mindestens einem anderen benachbarten Durchgangskanal (30) der Mehrzahl von Durchgangskanälen (30) in Kontakt steht,
**dadurch gekennzeichnet, dass** die oberen Ränder (38) von beiden benachbarten Durchgangskanälen (30) mindestens ein gemeinsames lokales Maximum (42) haben,
wobei eine Schnittebene, die parallel zu der Dickenrichtung (TD) des Substrats (20) ist, das mindestens eine gemeinsame lokale Maximum (42) umfasst und die Zentralachse (CA) von mindestens einem der beiden benachbarten Durchgangskanäle (30) umfasst oder schneidet, eine Schnittlinie mit einer Seitenwand des mindestens einen der beiden benachbarten Durchgangskanäle (30) definiert, und
wobei die Schnittlinie einen ersten Anteil (44), der konvex geformt ist, einen zweiten Anteil (46), der konkav geformt, und einen dritten Anteil (48) umfasst, der wiederum konvex geformt ist, wenn man von dem mindestens einen gemeinsamen lokalen Maximum (42) in der Dickenrichtung (TD) des Substrats (20) in Richtung des mittleren Bereichs (MR) des Substrats (20) geht.

2. Papiermaschinenbespannung nach Anspruch 1, wobei jedwede Schnittlinie, die dadurch definiert ist, dass sie das Substrat (20) schneidet, wobei eine Schnittebene parallel zu der Dickenrichtung (TD) des Substrats (20) ist und das mindestens eine gemeinsame lokale Maximum (42) umfasst, einen ersten Anteil (44, 44*), der konvex geformt ist, einen zweiten Anteil (46, 46*), der konkav geformt ist, und einen dritten Anteil (48, 48*) umfasst, der wiederum konvex geformt ist, wenn man von dem mindestens einen gemeinsamen lokalen Maximum (42) in der Dickenrichtung (TD) des Substrats (20) in Richtung des mittleren Bereichs (MR) des Substrats (20) geht.

3. Papiermaschinenbespannung nach Anspruch 1 oder 2, wobei ein erster Wendepunkt (50, 50*), der sich zwischen dem ersten Anteil (44, 44*) und dem zweiten Anteil (46, 46*) der Schnittlinie befindet, und vorzugsweise auch ein zweiter Wendepunkt (52, 52*), der sich zwischen dem zweiten Anteil (46, 46*) und dem dritten Anteil (48, 48*) der Schnittlinie befindet, sich nahe dem mindestens einen lokalen Maximum (42) befindet bzw. befinden, d. h. in dem oberen Viertel, bevorzugt in dem oberen Fünftel, bevorzugter in dem oberen Sechstel des Substrats (20).

4. Papiermaschinenbespannung nach einem der vorhergehenden Ansprüche, wobei mindestens 90 %, vorzugsweise alle der Durchgangskanäle (30) in dem nutzbaren Bereich (UR) des Substrats (UR) einen oberen Rand (38) haben, welcher mit einem oberem Rand (38) von mindestens einem anderen benachbarten Durchgangskanal (30), vorzugsweise von allen anderen benachbarten Durchgangskanälen (30), von der Mehrzahl der Durchgangskanäle (30) in dem nutzbaren Bereich (UR) des Substrats (20) direkt in Kontakt steht, und wobei die oberen Ränder (38) der Mehrzahl, vorzugsweise von allen, von diesen direkt benachbarten Durchgangskanälen (30) mindestens ein gemeinsames lokales Maximum (42) haben, wobei eine Schnittebene, die parallel zu der Dickenrichtung (TD) des Substrats (20) ist, das mindestens eine gemeinsame lokale Maximum (42) umfasst und die Zentralachse (CA) von mindestens einem der entsprechenden benachbarten Durchgangskanäle (30) umfasst oder schneidet, eine Schnittlinie mit einer Seitenwand des einen der entsprechenden benachbarten Durchgangskanäle (30) definiert,
wobei die Schnittlinie einen ersten Anteil (44), der konvex geformt ist, einen zweiten Anteil (46), der konkav geformt, und einen dritten Anteil (48) umfasst, der wiederum konvex geformt ist, wenn man von dem mindestens einen gemeinsamen lokalen Maximum in der Dickenrichtung (TD) des Substrats (20) in Richtung des mittleren Bereichs (MR) des Substrats (20) geht.

5. Papiermaschinenbespannung nach einem der vorhergehenden Ansprüche, wobei weniger als 5 %, vorzugsweise 0 % einer Oberfläche (20) an der Oberseite des Substrats (20) in ihrem nutzbaren Bereich plan und im Wesentlichen orthogonal zu der Dickenrichtung (TD) des Substrats (20) sind.

6. Papiermaschinenbespannung nach einem der vorhergehenden Ansprüche, wobei zwischen 70 % und 90 %, vorzugsweise zwischen 75 % und 85 % und bevorzugter etwa 80 % einer Oberfläche (24) an der Unterseite des Substrats (20) plan und im Wesentlichen orthogonal zu der Dickenrichtung (TD) des Substrats (20) sind.

7. Papiermaschinenbespannung nach einem der vorhergehenden Ansprüche, wobei eine Form der Querschnittfläche von mindestens einem Durchgangskanal (30), vorzugsweise von allen Durchgangskanälen (30), von der Mehrzahl der Durchgangskanäle (30) sich ändert, wenn man von der Oberseite in der Dickenrichtung (TD) des Substrats (20) zu der Unterseite geht.

8. Papiermaschinenbespannung nach Anspruch 7, wobei die Form der Querschnittfläche in einem oberen Bereich des Durchgangskanals (30) deutlich stärker elliptisch als in einem unteren Bereich des Durchgangskanals (30) ist.

9. Papiermaschinenbespannung nach Anspruch 8, wobei die Form der Querschnittfläche in dem oberen Bereich des Durchgangskanals (30) eine erste Abmessung, die sich quer zur Maschinenrichtung erstreckt, und eine zweite Abmessung hat, die sich in Maschinenrichtung erstreckt, wobei die erste Abmessung kleiner als die zweite Abmessung ist.

10. Papiermaschinenbespannung nach Anspruch 8, wobei die Form der Querschnittfläche in dem oberen Bereich des Durchgangskanals (30) eine erste Abmessung, die sich quer zur Maschinenrichtung erstreckt, und eine zweite Abmessung hat, die sich in Maschinenrichtung erstreckt, wobei die erste Abmessung größer als die zweite Abmessung ist.

11. Papiermaschinenbespannung nach einem der Ansprüche 7 bis 10, wobei die Form der Querschnittfläche auf der Unterseite des Substrats (20) im Wesentlichen kreisrund ist.

12. Papiermaschinenbespannung nach einem der vorhergehenden Ansprüche, wobei mindestens 90 % aller Durchgangskanäle (30) in dem nutzbaren Bereich (UR) des Substrats (20) in einem nicht-schachbrettartigen Muster angeordnet sind.

13. Verfahren zum Produzieren der Papiermaschinenbespannung nach einem der vorhergehenden Ansprüche, umfassend die folgenden Schritte:
- Bereitstellen eines Substrats (20) mit einer ersten Oberfläche (22) und einer zweiten Oberfläche (24), wobei die erste Oberfläche (22) und die zweite Oberfläche (24) vorzugsweise planar und parallel zueinander sind; und
- Ausbilden einer Mehrzahl nicht-zylindrischer Durchgangslöcher (31, 32) in einem nutzbaren Bereich (UR) des Substrats (20) unter Verwendung eines Lasers,
wobei mindestens einige, vorzugsweise alle, von der Mehrzahl der Durchgangslöcher (30), die einander benachbart sind, in einem so engen Abstand ausgebildet sind, dass sie einander teilweise überlappen,
wobei der Laser während der Ausbildung der Mehrzahl nicht-zylindrischer Durchgangslöcher (31, 32) in einer solchen Weise gesteuert wird, dass die oberen Ränder (38) der überlappenden Durchgangslöcher (30) mindestens ein gemeinsames lokales Maximum (42) haben,
wobei eine Schnittebene, die parallel zu der Dickenrichtung (TD) des Substrats (20) ist, das mindestens eine gemeinsame lokale Maximum (42) umfasst und die Zentralachse (CA) von mindestens einem der überlappenden Durchgangslöcher (30) umfasst oder schneidet, eine Schnittlinie mit einer Seitenwand des mindestens einen der überlappenden Durchgangslöcher (30) definiert,
und wobei die Schnittlinie einen ersten Anteil (44), der konvex geformt ist, einen zweiten Anteil (46), der konkav geformt, und einen dritten Anteil (48) umfasst, der wiederum konvex geformt ist, wenn man von dem mindestens einen gemeinsamen lokalen Maximum (42) in der Dickenrichtung (TD) des Substrats (20) in Richtung des mittleren Bereichs (MR) des Substrats (20) geht.

14. Verfahren nach Anspruch 13, wobei, wenn alle der Durchgangslöcher (30) in dem nutzbaren Bereich (UR) des Substrats (20) ausgebildet worden sind, mindestens eine von der ersten Oberfläche (22) und der zweiten Oberfläche (24) in dem nutzbaren Bereich (UR) zu mindestens 90 %, vorzugsweise zu mindestens 100 % verschwunden ist.

15. Verfahren nach Anspruch 13 oder 14, wobei während des Schrittes der Ausbildung der Durchgangslöcher (31, 32) im Substrat (20) Kaltluft auf das Substrat (20) geblasen wird.

## Revendications

1. Habillage de machine à papier comprenant un substrat (20) avec un côté supérieur, un côté inférieur, deux bords latéraux et une région utilisable (UR) entre les deux bords latéraux, dans lequel la région utilisable (UR) comprend une pluralité de canaux débouchants (30) s'étendant chacun le long d'un axe central (CA) à travers le substrat (20) et reliant le côté supérieur avec le côté inférieur, dans lequel les canaux débouchants (30) ne sont pas cylindriques avec une section devenant plus petite lorsqu'on passe dans une direction de l'épaisseur (TD) du substrat (20) du côté supérieur à une région centrale (MR) du substrat (20) entre le côté supérieur et le côté inférieur,
et dans lequel un bord supérieur (38) d'au moins un de la pluralité de canaux débouchants (30) est en contact direct avec un bord supérieur (38) d'au moins un autre canal débouchant voisin (30) de la pluralité de canaux débouchants (30),
**caractérisé en ce que** les bords supérieurs (38) des deux canaux débouchants voisins (30) ont au moins un maximum local commun (42),
dans lequel un plan de coupe parallèle à la direction de l'épaisseur (TD) du substrat (20), comprenant l'au moins un maximum local commun (42) et comprenant ou croisant l'axe central (CA) d'au moins un des deux canaux débouchants voisins (30) définit une ligne d'intersection avec une paroi latérale de l'au moins un des deux canaux débouchants voisins (30),
et dans lequel la ligne d'intersection comprend une première partie (44) qui est de forme convexe, une deuxième partie (46) qui est de forme concave et une troisième partie (48) qui est de nouveau de forme convexe lorsqu'on passe dans la direction de l'épaisseur (TD) du substrat (20) de l'au moins un maximum local commun (42) vers la région centrale (MR) du substrat (20).

2. Habillage de machine à papier selon la revendication 1, dans lequel toute ligne d'intersection qui est définie par l'intersection du substrat (20) avec un plan de coupe parallèle à la direction de l'épaisseur (TD) du substrat (20) et comprenant l'au moins un maximum local commun (42) comprend une première partie (44, 44*) qui est de forme convexe, une deuxième partie (46, 46*) qui est de forme concave et une troisième partie (48, 48*) qui est de nouveau de forme convexe lorsqu'on passe dans la direction de l'épaisseur (TD) du substrat (20) de l'au moins un maximum local commun (42) vers la région centrale (MR) du substrat (20).

3. Habillage de machine à papier selon la revendication 1 ou 2, dans lequel un premier point d'inflexion (50, 50*) qui est situé entre la première partie (44, 44*) et la deuxième partie (46, 46*) de la ligne d'intersection, et de préférence aussi un deuxième point d'inflexion (52, 52*) qui est situé entre la deuxième partie (46, 46*) et la troisième partie (48, 48*) de la ligne d'intersection est/sont situé (s) près de l'au moins un maximum local (42), c.-à-d. dans le quart supérieur, de préférence dans le cinquième supérieur, mieux encore dans le sixième supérieur du substrat (20).

4. Habillage de machine à papier selon une des revendications précédentes, dans lequel au moins 90 %, de préférence la totalité des canaux débouchants (30) dans la région utilisable (UR) du substrat (UR) ont un bord supérieur (38) qui est en contact direct avec un bord supérieur (38) d'au moins un autre canal débouchant voisin (30), de préférence de tous les autres canaux débouchants voisins (30) de la pluralité de canaux débouchants (30) dans la région utilisable (UR) du substrat (20),
et dans lequel les bords supérieurs (38) de la majorité, de préférence de la totalité de ces canaux débouchants directement voisins (30) ont au moins un maximum local commun (42),
dans lequel un plan de coupe parallèle à la direction de l'épaisseur (TD) du substrat (20), comprenant l'au moins un maximum local commun (42) et comprenant ou croisant l'axe central (CA) d'au moins un canal débouchant donné parmi les canaux débouchants voisins correspondants (30) définit une ligne d'intersection avec une paroi latérale du canal débouchant donné parmi les canaux débouchants voisins correspondants (30),
dans lequel la ligne d'intersection comprend une première partie (44) qui est de forme convexe, une deuxième partie (46) qui est de forme concave et une troisième partie (48) qui est de nouveau de forme convexe lorsqu'on passe dans la direction de l'épaisseur (TD) du substrat (20) de l'au moins un maximum local commun vers la région centrale (MR) du substrat (20).

5. Habillage de machine à papier selon une des revendications précédentes, dans lequel moins de 5 %, de préférence 0 % d'une surface (20) sur le côté supérieur du substrat (20) dans sa région utilisable est plate et sensiblement orthogonale à la direction de l'épaisseur (TD) du substrat (20).

6. Habillage de machine à papier selon une des revendications précédentes, dans lequel entre 70 % et 90 %, de préférence entre 75 % et 85 %, et mieux encore environ 80 % d'une surface (24) sur le côté inférieur du substrat (20) est plate et sensiblement orthogonale à la direction de l'épaisseur (TD) du substrat (20).

7. Habillage de machine à papier selon une des revendications précédentes, dans lequel une forme de la section d'au moins un canal débouchant (30), de préférence de tous les canaux débouchants (30) de la pluralité de canaux débouchants (30) change lorsqu'on passe dans la direction de l'épaisseur (TD) du substrat (20) du côté supérieur au côté inférieur.

8. Habillage de machine à papier selon la revendication 7, dans lequel la forme de la section est sensiblement plus elliptique dans une région supérieure du canal débouchant (30) que dans une région inférieure du canal débouchant (30).

9. Habillage de machine à papier selon la revendication 8, dans lequel la forme de la section dans la région supérieure du canal débouchant (30) a une première dimension s'étendant dans le sens travers et une deuxième dimension s'étendant dans le sens machine, la première dimension étant inférieure à la deuxième dimension.

10. Habillage de machine à papier selon la revendication 8, dans lequel la forme de la section dans la région supérieure du canal débouchant (30) a une première dimension s'étendant dans le sens travers et une deuxième dimension s'étendant dans le sens machine, la première dimension étant supérieure à la deuxième dimension.

11. Habillage de machine à papier selon une des revendications 7 à 10 dans lequel, sur le côté inférieur du substrat (20), la forme de la section est sensiblement circulaire.

12. Habillage de machine à papier selon une des revendications précédentes, dans lequel au moins 90 % de tous les canaux débouchants (30) dans la région utilisable (UR) du substrat (20) ne sont pas disposés dans un motif de damier.

13. Procédé de production de l'habillage de machine à papier selon une des revendications précédentes comprenant les étapes suivantes :
- obtention d'un substrat (20) ayant une première surface (22) et une deuxième surface (24), la première surface (22) et la deuxième surface (24) étant de préférence planes et parallèles l'une à l'autre ; et
- formation d'une pluralité de trous débouchants non cylindriques (31, 32) dans une région utilisable (UR) du substrat (20) au moyen d'un laser,
dans lequel au moins certains, de préférence la totalité de la pluralité de trous débouchants (30) qui sont voisins les uns aux autres sont formés à une distance si proche qu'ils se chevauchent partiellement,
dans lequel, pendant la formation de la pluralité de trous débouchants non cylindriques (31, 32), le laser est commandé de manière à ce que les bords supérieurs (38) des trous débouchants se chevauchant (30) aient au moins un maximum local commun (42),
dans lequel un plan de coupe parallèle à la direction de l'épaisseur (TD) du substrat (20), comprenant l'au moins un maximum local commun (42) et comprenant ou croisant l'axe central (CA) d'au moins un des trous débouchants se chevauchant (30) définit une ligne d'intersection avec une paroi latérale de l'au moins un des trous débouchants se chevauchant (30),
et dans lequel la ligne d'intersection comprend une première partie (44) qui est de forme convexe, une deuxième partie (46) qui est de forme concave et une troisième partie (48) qui est de nouveau de forme convexe lorsqu'on passe dans la direction de l'épaisseur (TD) du substrat (20) de l'au moins un maximum local commun (42) vers la région centrale (MR) du substrat (20).

14. Procédé selon la revendication 13 dans lequel, quand tous les trous débouchants (30) ont été formés dans la région utilisable (UR) du substrat (20), la première surface (22) et/ou la deuxième surface (24) dans la région utilisable (UR) ont disparu à au moins 90 %, de préférence à 100 %.

15. Procédé selon la revendication 13 ou 14, dans lequel de l'air froid est soufflé sur le substrat (20) pendant l'étape de formation des trous débouchants (31, 32) dans le substrat (20) .
